# EUROPEAN PATENT APPLICATION

(11) **EP 1 544 744 A1**
(43) Date of publication of application: **22.06.2005**
(21) Application number: 03748601.6
(22) Date of filing: 26.09.2003
(51) Int. Cl.: G06F 15/00, H04B 7/26, H04L 12/28

(54) **TERMINAL AUTHENTICATION SYSTEM, TERMINAL AUTHENTICATION METHOD, AND TERMINAL AUTHENTICATION SERVER**

(30) Priority: 27.09.2002 JP 2002284334
(71) Applicant: MATSUSHITA ELECTRIC INDUSTRIAL CO., LTD., Kadoma-shi, Osaka 571-8501 (JP)
(72) Inventor: TANAKA, Takeshi, Yokosuka-shi, Kanagawa 239-0847 (JP); ARAMAKI, Takashi, Yokohama-shi, Kanagawa 232-0061 (JP); HIRANO, Jun, Yokosuka-shi, Kanagawa 239-0843 (JP)
(74) Representative: Grünecker, Kinkeldey, Stockmair & Schwanhäusser Anwaltssozietät
(86) International application number: PCT/JP2003/012318
(87) International publication number: WO 2004/029819

(57) **Abstract**

An object is to efficiently authenticate a terminal trying a connection (participate) to a mobile network even if a connection between a moving mobile router and a mobile router access base station on a ground side is unstable or impossible. Apart from a first authenticating server (authenticating server 7) arranged at a place away from the mobile network (mobile router lower network 4) arranged inside a mobile body, a second authenticating server (lower authenticating server 12) is arranged inside the mobile network, and the authentication of the mobile terminals (terminals 13a, 13b) is designed to be carried out even in the second authenticating server. In particular, if the connection between the mobile network on the mobile body side and the first authenticating server on the ground side (namely, the communication between a mobile router 10 and mobile router access base stations 5, 6) becomes impossible, the second authenticating server is designed to authenticate the mobile terminal trying to participate in the mobile network.

## Description

### TECHNICAL FIELD

The present invention relates to a terminal authenticating system and a terminal authenticating method and a terminal authenticating router, which carry out an authenticating process when a mobile terminal participates in a mobile network arranged inside a mobile body.

### BACKGROUND ART

Conventionally, when a terminal tries a connection (participation) to a mobile router lower network (a mobile network arranged inside a mobile body), an authenticating process for determining an allowance or disallowance of the connection to the terminal is carried out by an authenticating server belonging to a home network on a ground side different from a movable mobile router lower network. An authenticating server 7 receives an authentication data necessary for the authentication such as a user name, a password or the like from the terminal, refers to this authentication data, and performs the authenticating process for determining the allowance/disallowance of the connection to the mobile router lower network, on the terminal.

Also, for example, (Patent Document 1) discloses a method in which, when a connection to LAN (Local Area Network) different from LAN having an authentication information of a predetermined terminal is tried by the predetermined terminal, an authenticating server of the LAN to which the predetermined,terminal tries the connection requests an authenticating server of the LAN having the authentication information of the predetermined terminal to authenticate the predetermined terminal and judges whether or not the predetermined terminal has a right of the connection to the LAN.
Patent Document 1: Japanese Laid Open Patent Application (JP-A-Heisei, 10-70540) (Paragraphs [0014] to [0067], Fig. 1, Fig. 2 and Fig. 5).

However, a mobile router is movable and connected to an access base station through radio communication. Thus, the connection between the mobile router and the access base station is unstable, which frequently results in situation that the connection cannot be used temporally. In this way, under the situation that the connection cannot be used, the mobile router lower network (mobile network) cannot request the authenticating server on a home network to authenticate the terminal, and the authentication of the terminal becomes impossible. Thus, the terminal trying the connection to the mobile router lower network has a problem that the connection (participation) to the mobile router lower network is impossible until the mobile router can be connected to the access base station. Also, a case that the mobile router lower network moves and separates from the home network results in a problem that a distance between the mobile router lower network and the authenticating server on the home network is wider which increases a time of the authentication and a traffic and the like.

### DISCLOSURE OF THE INVENTION

In order to solve the foregoing problems, the present invention has an object to provide a terminal authenticating system and a terminal authenticating method and a terminal authenticating server, wherein even if a connection between a moving mobile router and an access base station on a ground side is unstable or impossible, an authentication of a terminal trying a connection (participation) to a mobile router lower network can be performed efficiently.

In order to attain the foregoing object, the terminal authenticating system of the present invention is configured such that apart from a first authenticating server (authenticating server) arranged at a place away from a mobile network (mobile router lower network) arranged inside a mobile body, a second authenticating server (lower authenticating server) is arranged inside the mobile network, and even the second authenticating server can authenticate the mobile terminal (terminal).

With this configuration, even if the connection between the moving mobile router and the access base station on the ground side is unstable or impossible, the authentication of the terminal trying the connection (participation) to the mobile network can be performed efficiently.

Moreover, in the terminal authenticating system of the present invention, the second authenticating server has authenticating means that can authenticate the mobile terminal and information storing means that can store an authentication data to be referred when the mobile terminal is authenticated.

With this configuration, the second authenticating server that belongs to the mobile network and moves together with the mobile body can surely carry out the authenticating process.

Moreover, the terminal authenticating system of the present invention is configured such that an authentication request is transmitted from the mobile terminal to the second authenticating server.

With this configuration, the second authenticating server can surely recognize the existence of the mobile terminal trying to participate in the mobile network.

Moreover, the terminal authenticating system of the present invention is configured such that the second authenticating server has connection judging means for judging whether or not a communication between the first authenticating server and the second authenticating server is possible, and when the second authenticating server receives the authentication request from the mobile terminal, if the communication with the first authenticating server is judged to be possible, sends the authentication request to the first authenticating server and receives an authentication result of the mobile terminal from the first authenticating server, and if the communication with the first authenticating server is judged to be impossible, uses the authenticating means and authenticates the mobile terminal.

With this configuration, if the authentication in the first authenticating server is possible, the authentication is carried out in the first authenticating server, and only if the authentication in the first authenticating server is impossible, the authentication can be carried out in the second authenticating server.

Moreover, the terminal authenticating system of the present invention is configured such that when sending the authentication request to the first authenticating server and receiving the authentication result of the mobile terminal from the first authenticating server, the second authenticating server correlates an identification information of the mobile terminal and the authentication result of the mobile terminal and stores as the authentication data in the information storing means.

With this configuration, the second authenticating server can grasp the mobile terminal whose authentication is successful in the first authenticating server. Hereafter, the authentication of the mobile terminal can be carried out in the second authenticating server.

Moreover, the terminal authenticating system of the present invention is configured such that the second authenticating server has the connection judging means for judging whether or not the communication between the first authenticating server and the second authenticating server is possible, and the connection judging means judges whether or not the communication with the first authenticating server is possible, and if the communication with the first authenticating server is judged to be possible, the second authenticating server obtains the authentication data required to authenticate the mobile terminal from the first authenticating server at any timing and stores in the information storing means.

With this configuration, the second authenticating server can obtain the information required to authenticate the terminal in advance from the first authenticating server, in the situation that the communication with the first authenticating server is possible.

Moreover, the terminal authenticating system of the present invention is configured such that the second authenticating server obtains the authentication data from the first authenticating server at a predetermined timing and updates the authentication data stored in the information storing means.

With this configuration, the second authenticating server can attain synchronization with the first authenticating server, and the second authenticating server can always obtain the newest information stored by the first authenticating server.

Moreover, the terminal authenticating system of the present invention is configured such that when the second authenticating server authenticates the mobile terminal and fails to authenticate the mobile terminal, the second authenticating server sends the authentication request to the first authenticating server and receives the authentication result of the mobile terminal from the first authenticating server.

With this configuration, the second authenticating server carries out the authentication as much as possible, and only in a case of a failure in the authentication, the first authenticating server again carries out the sure authenticating process. Consequently, it is possible to attain the reduction in time and traffic.

Moreover, the terminal authenticating system of the present invention is configured such that the authentication result carried out by the first authenticating server or second authenticating server is reported to the mobile terminal transmitting the authentication request from the second authenticating server.

With this configuration, the authentication result carried out by the first authenticating server or second authenticating server can be reported from the second authenticating server to the mobile terminal, and the second authenticating server can grasp the authentication results of all terminals.

Also, in order to attain the foregoing object, the terminal authenticating method of the present invention is designed such that when the mobile terminal participates in the mobile network arranged inside the mobile body, apart from the first authenticating server arranged at the place away from the mobile network, the second authenticating server arranged inside the mobile network authenticates the mobile terminal.

With this configuration, even if the connection between the moving mobile router and the access base station on the ground side is unstable or impossible, the authentication of the terminal trying the connection (participation) to the mobile network can be performed efficiently.

Moreover, the terminal authenticating method of the present invention is designed such that the mobile terminal transmits the authentication request to the second authenticating server.

Consequently, the second authenticating server can surely recognize the existence of the mobile terminal trying to participate in the mobile network.

Moreover, the terminal authenticating method of the present invention is designed such that the second authenticating server, when receiving the authentication request from the mobile terminal, judges whether or not the communication between the first authenticating server and the second authenticating server is possible, and if the communication with the first authenticating server is judged to be possible, sends the authentication request to the first authenticating server and receives the authentication result of the mobile terminal from the first authenticating server, and if the communication with the first authenticating server is judged to be impossible, the second authenticating server authenticates the mobile terminal.

Consequently, if the authentication in the first authenticating server is possible, the authentication is carried out in the first authenticating server, and only if the authentication in the first authenticating server is impossible, the authentication can be carried out in the second authenticating server.

Moreover, the terminal authenticating method of the present invention is designed such that when sending the authentication request to the first authenticating server and receiving the authentication result of the mobile terminal from the first authenticating server, the second authenticating server correlates and stores the identification information of the mobile terminal and the authentication result of the mobile terminal.

Consequently, the second authenticating server can grasp the mobile terminal whose authentication is successful in the first authenticating server. Hereafter, the authentication of the mobile terminal can be carried out in the second authenticating server.

Moreover, the terminal authenticating method of the present invention is designed such that the second authenticating server judges whether or not the communication between the first authenticating server and the second authenticating server is possible, and if the communication with the first authenticating server is judged to be possible, obtains and stores the authentication data required to authenticate the mobile terminal from the first authenticating server at any timing.

Consequently, the second authenticating server can obtain the information required to authenticate the terminal in advance from the first authenticating server, in the situation that the communication with the first authenticating server is possible.

Moreover, the terminal authenticating method of the present invention is designed such that the second authenticating server obtains the authentication data from the first authenticating server at the predetermined timing and updates the authentication data stored in the information storing means.

Consequently, in the first authenticating server, the re-execution of the sure authenticating process enables the reduction in time and traffic.

Moreover, the terminal authenticating method of the present invention is designed such that the second authenticating server reports the authentication result carried out by the first authenticating server or second authenticating server to the mobile terminal transmitting the authentication request.

Consequently, the authentication result carried out by the first authenticating server or second authenticating server can be reported from the second authenticating server to the mobile terminal, and the second authenticating server can grasp the authentication results of all terminals.

Also, in order to attain the foregoing object, the terminal authenticating server of the present invention is configured so as to be the terminal authenticating server that can authenticate the mobile terminal when the mobile terminal participates in the mobile network arranged inside the mobile body, and so as to be arranged inside the mobile network, apart from the terminal authenticating server arranged at the place away from the mobile network.

With this configuration, even if the connection between the moving mobile router and the access base station on the ground side is unstable or impossible, the authentication of the terminal trying the connection (participation) to the mobile network can be performed efficiently.

Moreover, the terminal authenticating server of the present invention has the authenticating means that can authenticate the mobile terminal and the information storing means that can store the authentication data to be referred when the mobile terminal is authenticated.

With this configuration, the terminal authenticating server that belongs to the mobile network and moves together with the mobile body can surely carry out the authenticating process.

Moreover, the terminal authenticating server of the present invention is configured such that the authentication request is received from the mobile terminal.

With this configuration, the terminal authenticating server inside the mobile network

can surely recognize the existence of the mobile terminal trying to participate in the mobile network.

Moreover, the terminal authenticating server of the present invention is configured such that it has the connection judging means for judging whether or not the communication with the terminal authenticating server arranged at the place away from the mobile network is possible, and when receiving the authentication request from the mobile terminal, if the communication with the terminal authenticating server arranged at the place away from the mobile network is judged to be possible, it sends the authentication request to the terminal authenticating server arranged at the place away from the mobile network and receives the authentication result of the mobile terminal from the terminal authenticating server arranged at the place away from the mobile network, and if the communication with the terminal authenticating server arranged at the place away from the mobile network is judged to be impossible, it uses the authenticating means and authenticates the mobile terminal.

With this configuration, if the authentication in the terminal authenticating server belonging to the home network is possible, the authentication is carried out in the terminal authenticating server belonging to the home network, and only if the authentication in the terminal authenticating server belonging to the home network is impossible, the authentication can be carried out in the terminal authenticating server inside the mobile network.

Moreover, the terminal authenticating server of the present invention is so as to correlate the identification information of the mobile terminal and the authentication result of the mobile terminal when receiving the authentication result of the mobile terminal from the terminal authenticating server arranged at the place away from the mobile network and store as the authentication data in the information storing means.

With this configuration, the terminal authenticating server inside the mobile network can grasp the mobile terminal whose authentication is successful in the terminal authenticating server belonging to the home network. Hereafter, the authentication of the mobile terminal can be carried out in the terminal authenticating server inside the mobile network.

Moreover, the terminal authenticating server of the present invention is configured such that it has the connection judging means for judging whether or not the communication with the terminal authenticating server arranged at the place away from the mobile network is possible, and if the communication with the terminal authenticating server arranged at the place away from the mobile network is judged to be possible, it obtains the authentication data required to authenticate the mobile terminal from the terminal authenticating server arranged at the place away from the mobile network at any timing and stores in the information storing means.

With this configuration, the terminal authenticating server inside the mobile network can obtain the information required to authenticate the terminal in advance from the terminal authenticating server belonging to the home network, in the situation that the communication with the terminal authenticating server belonging to the home network is possible.

Moreover, the terminal authenticating server of the present invention is configured so as to obtain the authentication data from the terminal authenticating server arranged at the place away from the mobile network at the predetermined timing and update the authentication data stored in the information storing means.

With this configuration, the terminal authenticating server inside the mobile network can attain synchronization with the terminal authenticating server belonging to the home network, and the terminal authenticating server inside the mobile network can always obtain the newest information stored by the terminal authenticating server belonging to the home network.

Moreover, the terminal authenticating server of the present invention is configured such that when the authenticating means authenticates the mobile terminal and fails to authenticate the mobile terminal, it sends the authentication request to the terminal authenticating server arranged at the place away from the mobile network and receives the authentication result of the mobile terminal from the terminal authenticating server.

With this configuration, the terminal authenticating server inside the mobile network carries out the authentication as much as possible, and only in the case of the failure in the authentication, the terminal authenticating server belonging to the home network again carries out the sure authenticating process. Consequently, it is possible to attain the reduction in time and traffic.

Moreover, the terminal authenticating server of the present invention is configured so as to report the authentication result carried out by the terminal authenticating server arranged at the place away from the mobile network or the terminal authenticating server to the mobile terminal transmitting the authentication request.

With this configuration, the authentication result carried out by the terminal authenticating server belonging to the home network or the terminal authenticating server inside the mobile network can be reported from the terminal authenticating server inside the mobile network to the mobile terminal, and the terminal authenticating server inside the mobile network can grasp the authentication results of all terminals.

### BRIEF DESCRIPTION OF THE DRAWINGS

Fig. 1 is a network configuration view showing an embodiment of the present invention.
Fig. 2 is a block diagram showing an inner configuration of a terminal arranged in the network of the embodiment of the present invention.
Fig. 3 is a block diagram showing an inner configuration of a mobile router arranged in the network of the embodiment of the present invention.
Fig. 4 is a block diagram showing an inner configuration of a lower authenticating server arranged in the network of the embodiment of the present invention.
Fig. 5 is a flowchart explaining an operation of the lower authenticating server shown in Fig. 4.
Fig. 6 is a block diagram showing another example of the inner configuration of the lower authenticating server arranged in the network of the embodiment of the present invention.

### BEST MODE FOR CARRYING OUT THE INVENTION

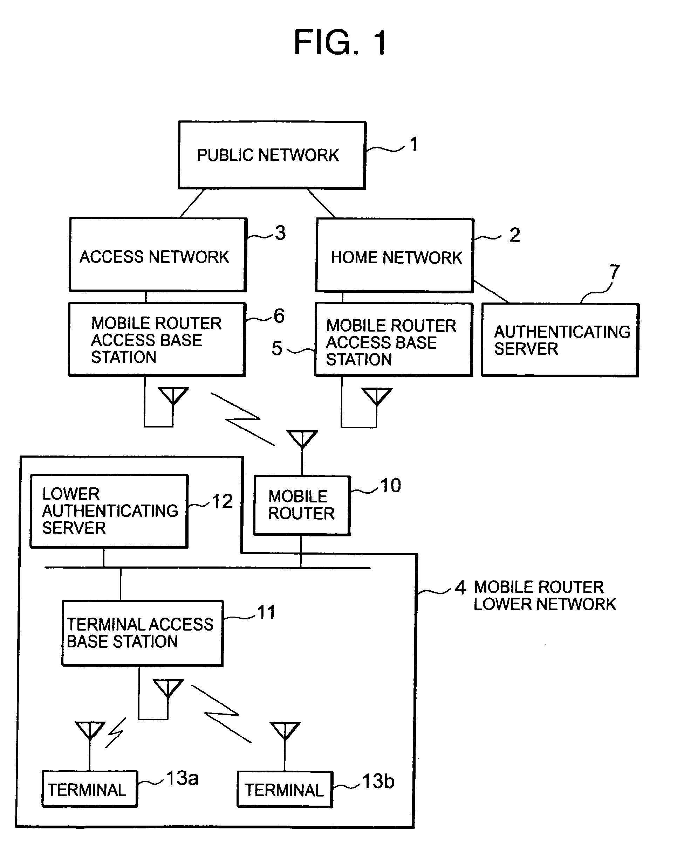

The embodiment of the present invention will be described below with reference to the drawings. Fig. 1 is a network configuration view showing the embodiment of the present invention. A network shown in Fig. 1 is provided with a public network 1, a home network 2, an access network 3, a mobile router lower network 4, a mobile router access base station 5 connected to the home network 2, a mobile router access base station 6 connected to the access network 3, an authenticating server 7 connected to the home network 2, and a mobile router 10 connected to the mobile router lower network 4.

The mobile router lower network 4 is arranged inside a mobile body, for example, such as a movable vehicle or the like, and can be connected through the mobile router 10 to the mobile router access base stations 5, 6 by radio communication. That is, if the mobile router 10 and the mobile router access base station 5 are connected by the radio communication, the mobile router lower network 4 can be connected through the mobile router 10, the mobile router access base station 5 and the home network 2 to the public network 1. If the mobile router 10 and the mobile router access base station 6 are connected by the radio communication, the mobile router lower network 4 can be connected through the mobile router 10, the mobile router access base station 6 and the access network 3 to the public network 1. Incidentally, in Fig. 1, although one access network 3 and one mobile router access base stations 5, 6 each are shown, the plurality can be also arranged.

Also, the mobile router lower network 4 is composed of a terminal access base station 11, a lower authenticating server 12 on the mobile router lower network 4 and a plurality of terminals 13 (Fig. 1 shows two terminals 13 of terminals 13a, 13b). The terminal access base station 11 and the lower authenticating server 12 on the mobile router lower network 4 are connected to the mobile router 10. Also, the terminal 13 can be connected to the mobile router 10 and the lower authenticating server 12 by the radio communication with the terminal access base station 11, and can be further connected from the mobile router 10 through the home network 2 and the access network 3 to the public network 1.

The mobile router 10 and the mobile router lower network 4 are originally attached to and managed by the home network 2, and a confirmation (authentication) as to whether or not the terminal 13 has a right of a connection to the mobile router lower network 4 is carried out by the authenticating server 7. Also, the authentication data (a user name, a password and the like) to carry out this authenticating process is stored in the authenticating server 7.

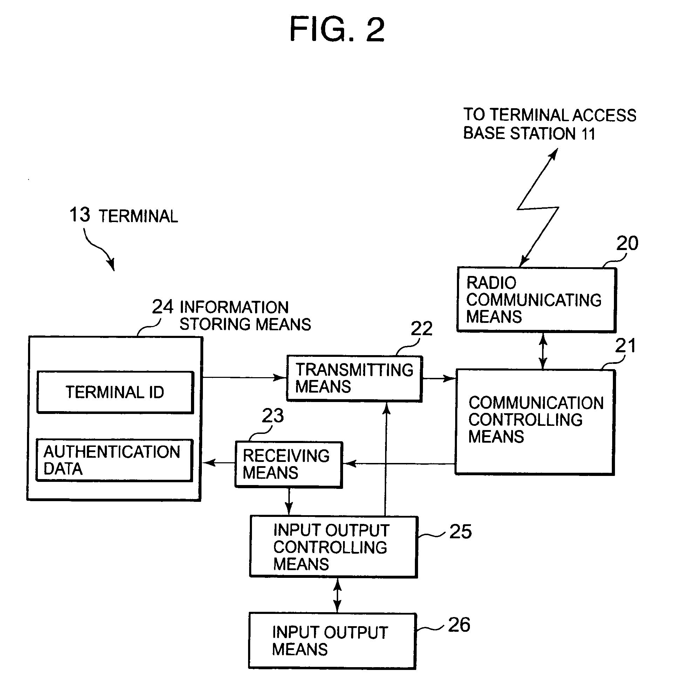

One example of the inner configuration of the terminal 13 shown in Fig. 1 will be described below. Fig. 2 is a block diagram showing the inner configuration of the terminal arranged in the network of the embodiment of the present invention. Incidentally, the terminal 13 shown in Fig. 1 has the inner configuration shown in Fig. 2. The terminal 13 shown in Fig. 2 is composed of radio communicating means 20, communication controlling means 21, transmitting means 22, receiving means 23, information storing means 24, input output controlling means 25 and input output means 26.

The radio communicating means 20 and the communication controlling means 21 enable a communication with a communicating apparatus outside the terminal 13 such as the terminal access base station 11 and the like. When the radio communicating means 20 receives a data, the received data can be supplied through the communication controlling means 21 to the receiving means 23, and the received data can be further supplied from the receiving means 23 to the information storing means 24 and the input output controlling means 25. Also, the information storing means 24 stores a terminal ID such as a MAC address and authentication data. For example, when an authentication request is transmitted to the authenticating server 7 or the lower authenticating server 12, the transmitting means 22 can transmit those terminal ID and authentication data through the communication controlling means 21 and the radio communicating means 20 to outside. Also, the input output controlling means 25 and the input output means 26 enable a transmission of input data and an output of reception data. If the authentication is successful that enables the terminal 13 to be connected to the mobile router lower network 4, the transmission and reception of a communication data are mainly executed through the input output controlling means 25 and the input output means 26.

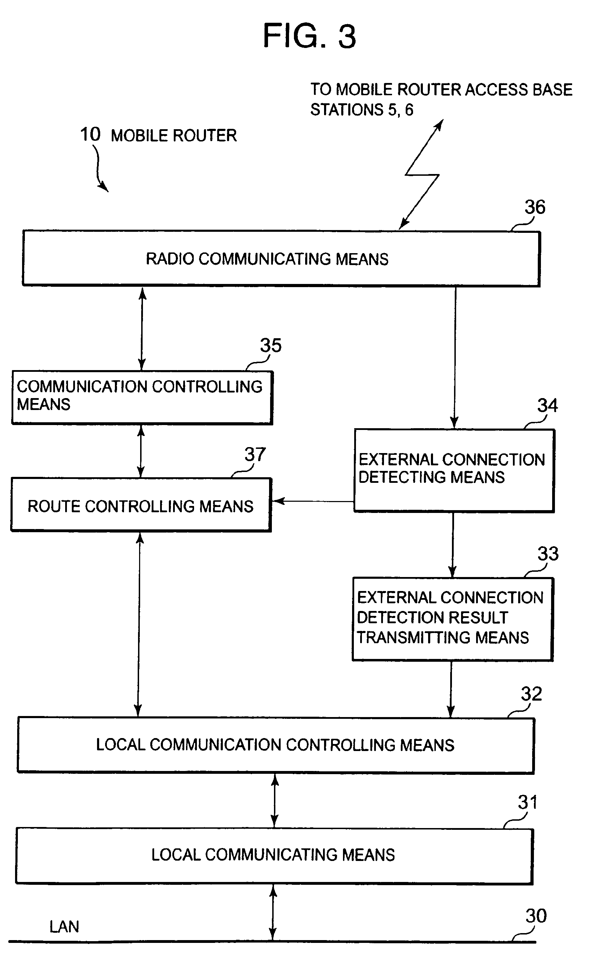

One example of the inner configuration of the mobile router 10 shown in Fig. 1 will be described below. Fig. 3 is a block diagram showing the inner configuration of the mobile router arranged in the network of the embodiment of the present invention. Incidentally, the mobile router 10 shown in Fig. 1 has the inner configuration shown in Fig. 3. The mobile router 10 shown in Fig. 3 is composed of local communicating means 31, local communication controlling means 32, external connection detection result transmitting means 33, external connection detecting means 34, communication controlling means 35, radio communicating means 36 and route controlling means 37.

The radio communicating means 36 and the communication controlling means 35 enable a communication with the communicating apparatus outside the mobile router 10 such as the mobile router access base stations 5, 6 and the like. Also, the external connection detecting means 34 detects whether or not the radio communicating means 36 can use the radio connection with outside the mobile router 10 and sends the external connection detection result to the route controlling means 37 and the external connection detection result transmitting means 33.

The external connection detection result transmitting means 33 is connected through the local communication controlling means 32 to the local communicating means 31 and outputs the external connection detection result onto a LAN 30. The terminal access base station 11 and the lower authenticating server 12 are connected to this LAN 30, and the external connection detection result can be sent from the external connection detection result transmitting means 33 to the lower authenticating server 12.

Also, the local communication controlling means 32 can receive a transmission data to outside the mobile router lower network 4, from the terminal access base station 11 and lower authenticating server 12 which are connected to the LAN 30, and further the terminal 13 connected to the terminal access base station 11, through the local communicating means 31. The route controlling means 37 suitably performs a route control on the transmission data received by the local communication controlling means 32, and the transmission data that is route-controlled is transmitted through the communication controlling means 35 and the radio communicating means 36 to the communicating apparatus outside the mobile router 10 by the radio communication. Also, with regard to the reception data received from outside the mobile router lower network 4 through the radio communicating means 36 and the communication controlling means 35, similarly, the route controlling means 37 suitably performs the route-control thereon, and it is sent through the local communication controlling means 32 and the local communicating means 31 onto the LAN 30.

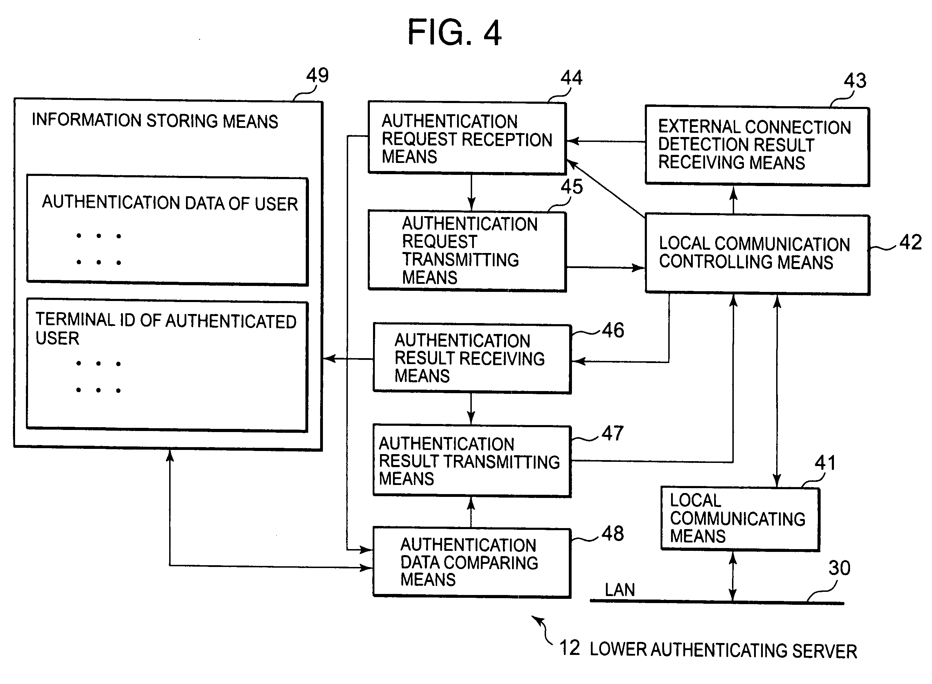

One example of the inner configuration of the lower authenticating server 12 shown in Fig. 1 will be described below. Fig. 4 is a block diagram showing the inner configuration of the lower authenticating server arranged in the network of the embodiment of the present invention. Incidentally, the lower authenticating server 12 shown in Fig. 1 has the inner configuration shown in Fig. 4. The lower authenticating server 12 shown in Fig. 4 is composed of local communicating means 41, local communication controlling means 42, external connection detection result receiving means 43, authentication request reception means 44, authentication request transmitting means 45, authentication result receiving means 46, authentication result transmitting means 47, authentication data comparing means 48 and information storing means 49.

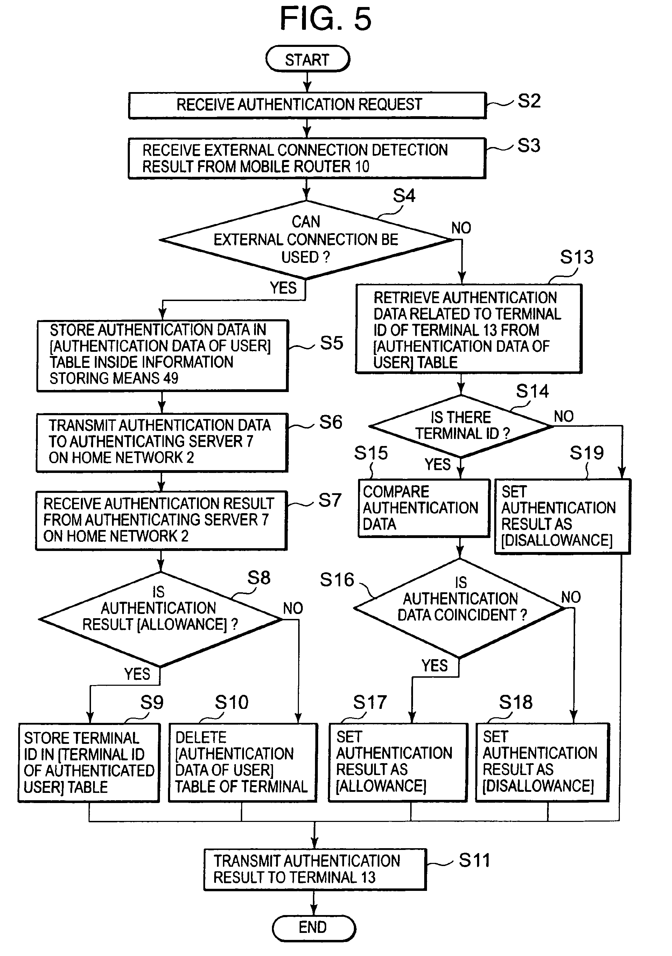

Also, Fig. 5 is a flowchart explaining the operation of the lower authenticating server shown in Fig. 4. The operation of the lower authenticating server 12 will be described below with reference to Fig. 5. At first, the lower authenticating server 12 receives, from a terminal 13 trying to participate in the mobile network, the authentication data including a terminal ID of the terminal 13 and a user name and password of this terminal 13 as the authentication request (Step S2). On the other hand, the lower authenticating server 12 receives the external connection detection result transmitted through the LAN 30 from the mobile router 10, through the local communicating means 41 and the local communication controlling means 42 by the external connection detection result receiving means 43 (Step S3). Incidentally, the lower authenticating server 12, only if receiving the authentication request from the terminal 13, can be designed so as to request the external connection detection result to the mobile router 10 or can be designed so as to periodically obtain the external connection detection result from the mobile router 10.

The external connection detection result received by the external connection detection result receiving means 43 is supplied to the authentication request reception means 44, and whether or not the external connection can be used (that is, whether or not the communication with the authenticating server 7 is possible) is judged (Step S4). If the external connection can be used, the authentication data received from the terminal 13 together with the authentication request is stored in an [Authentication Data of User] table inside the information storing means 49 (Step S5), and the authentication request reception means 44 supplies the authentication request to the authentication request transmitting means 45.

The authentication request transmitting means 45 transmits the authentication request through the local communication controlling means 42, the local communicating means 41, the LAN 30 and the mobile router 10 (further through the access network 3 and the public network 1, if the mobile router 10 carries out a communication with the mobile router access base station 6 connected to the access network 3) to the authenticating server 7 on the home network 2 (Step S6) and requests the authentication in the authenticating server 7.

In the authenticating server 7, the authentication related to the authentication request is carried out, and the lower authenticating server 12 receives the authentication result through the LAN 30, the local communicating means 41 and the local communication controlling means 42 by the authentication result receiving means 46 (Step S7). Then, whether or not the authentication result received by the authentication result receiving means 46 gives a connection allowance to the terminal 13 is judged (Step S8). If the connection allowance is given to the terminal 13, the terminal ID of the terminal 13 to which the connection allowance is given is stored in a [Terminal ID of Authenticated User] table inside the information storing means 49 (Step S9). Consequently, the terminal ID and user ID to which the connection allowance is given (namely, the authentication is successful) are stored in the information storing means 49.

Also, if the authentication result does not give the connection allowance to the terminal 13, the authentication data of the user stored in the [Authentication Data of User] table at the step S5 is deleted (Step S10). Then, the authentication result transmitting means 47 transmits the authentication result indicating the allowance/disallowance of the connection to the terminal 13 (Step S11).

On the other hand, if the external connection detection result supplied to the authentication request reception means 44 indicates that the external connection cannot be used, the authentication request reception means 44 supplies the authentication request to the authentication data comparing means 48. Then, the authentication data comparing means 48 retrieves the authentication data related to the terminal ID of the terminal 13 from the [Authentication Data of User] table inside the information storing means 49 (Step S13), and judges whether or not there is the authentication data related to the terminal ID (Step S14).

If there is the authentication data, whether or not the authentication data registered in the [Authentication Data of User] inside the information storing means 49 and the authentication data received from the terminal 13 are coincident is compared (Step S15), and whether or not both of them are coincident is judged (Step S16). If both of them are coincident, the connection allowance of the terminal 13 is set as the authentication result (Step S17), and if both of them are not coincident, a connection disallowance of the terminal 13 is set as the authentication result (Step S18), and the authentication result is supplied to the authentication result transmitting means 47. Also, if the authentication data related to the terminal ID is not detected at the step S14, the connection disallowance of the terminal 13 is set as the authentication result (Step S19), and the authentication result is supplied to the authentication result transmitting means 47. Then, the authentication result transmitting means 47 transmits those authentication results indicating the allowance/disallowance of the connection to the terminal 13 (Step S11).

As mentioned above, in the present invention, if the terminal 13 is connected to the terminal access base station 11 on the mobile router lower network 4 (if the terminal 13 participates in the mobile router lower network 4), the terminal 13 transmits the authentication data, which includes the terminal ID of the terminal 13 and the user name and password of this terminal 13, as the authentication request to the lower authenticating server 12 newly arranged on the mobile router lower network 4 in the present invention.

Then, if the mobile router 10 can use the connection with the mobile router access base stations 5, 6, the lower authenticating server 12 on the mobile router lower network 4 transmits the authentication request of the terminal 13 to the authenticating server 7 on the home network 2 so that the authentication is carried out in the authenticating server 7 on the home network 2. Then, if the authentication result that is an answer from the authenticating server 7 of the home network 2 indicates an authentication success, the authentication data related to the terminal 13 is stored in the information storing means 49. The lower authenticating server 12 can authenticate the terminal 13 on and after a next time by using the thus-stored authentication data.

Consequently, in a case that the connection between the mobile router 10 and the mobile router access base stations 5, 6 is liable to be lost, for example, in a case that the mobile router 10 and the mobile router lower network 4 are moving at high speeds, even if the connection between the mobile router 10 and the mobile router access base stations 5, 6 is actually lost, the authenticating process can be carried out by the lower authenticating server 12 on the mobile router lower network 4. Incidentally, the lower authenticating server 12 needs to store the authentication data of the user using the terminal and the terminal ID. Thus, this is especially effective in a case that the terminal 13 once participating in the mobile router lower network 4 to which the lower authenticating server 12 belongs again tries to participate in the mobile router lower network 4, for example, because the connection with the terminal access base station 11 is lost.

Incidentally, in the foregoing embodiment, in accordance with whether or not the connection between the mobile router 10 and the mobile router access base stations 5, 6 can be used, whether the authentication is carried out in the authenticating server 7 belonging to the home network 2 or the authentication is carried out in the lower authenticating server 12 belonging to the mobile router lower network 4 is determined. However, for example, when the authentications of all of the terminals 13 are firstly carried out in the lower authenticating server 12, only if the authentication results in a failure, the request of the authentication can be performed on the authenticating server 7 belonging to the home network 2. Thus, it is possible to save the time related to the authentication and the traffic to the lower authenticating server 12.

Also, in the foregoing embodiment, the lower authenticating server 12 stores only the terminal ID and user information related to the predetermined terminal in the information storing means 49 at the timing when the authentication request is received from the predetermined terminal trying the authentication request. However, all of the authentication data can be preliminarily stored in the information storing means 49, or at any timing, the lower authenticating server 12 can receive the authentication data from the authenticating server 7.

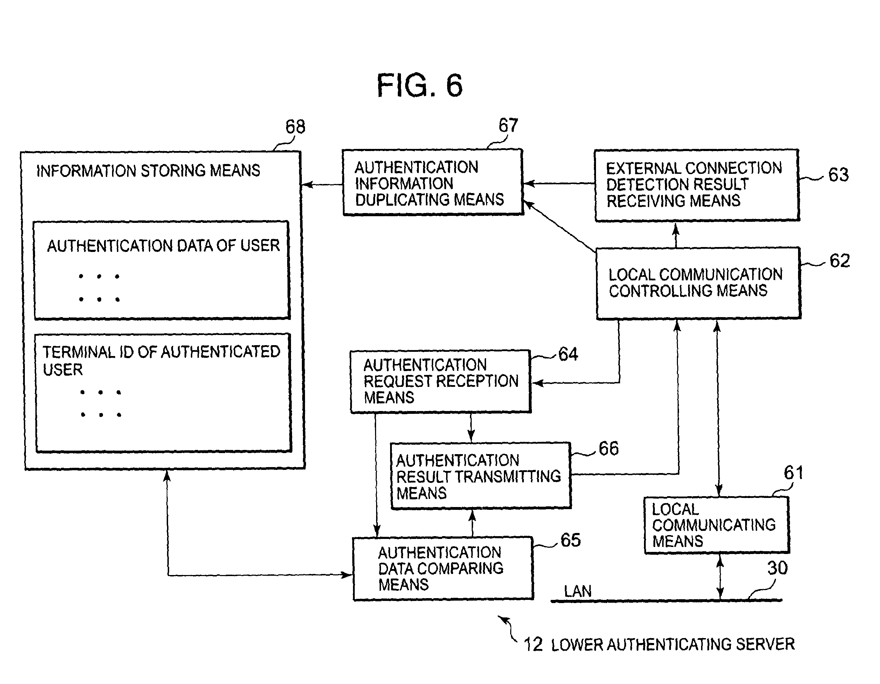

The inner configuration of the lower authenticating server which is configured such that the lower authenticating server 12 can receive the authentication data from the authenticating server 7 at any timing will be described below with reference to Fig. 6. Fig. 6 is a block diagram showing another example of the inner configuration of the lower authenticating server arranged in the network of the embodiment of the present invention. Incidentally, the lower authenticating server 12 shown in Fig. 1 has the inner configuration shown in Fig. 6.

The lower authenticating server 12 shown in Fig. 6 is composed of local communicating means 61, local communication controlling means 62, external connection detection result receiving means 63, authentication request reception means 64, authentication data comparing means 65, authentication result transmitting means 66, authentication information duplicating means 67 and information storing means 68. When the inner configuration shown in Fig. 6 and the inner configuration shown in Fig. 4 are compared, it is known that the lower authenticating server 12 shown in Fig. 6 is characterized by having no means related to the process of the authentication result in the authenticating server 7 on the home network 2.

Also, the lower authenticating server 12 shown in Fig. 6 is characterized by having the authentication information duplicating means 67. This authentication information duplicating means 67 can obtain the external connection detection result from the external connection detection result receiving means 63, and obtain the authentication data required to authenticate the terminal 13, from the authenticating server 7 on the home network 2, through the local communication controlling means 62, the local communicating means 61, the LAN 30, the mobile router 10 and the like, in accordance with the situation that the external connection can be used, and store the obtained authentication data in the information storing means 68.

Thus, the lower authenticating server 12 can obtain the authentication data necessary for the authentication from the authenticating server 7 at any timing (however, in the case that the external connection can be used). By referring to the thus-obtained authentication data, it is possible to exhibit the authentication ability similar to the authenticating server 7 belonging to the home network 2 and save the time related to the authentication and the traffic to the lower authenticating server 12. Incidentally, for example, in order to make the information of the lower authenticating server 12 synchronous with the information stored in the authenticating server 7 belonging to the home network 2, for example, at a predetermined timing such as a constant period or the like, preferably, the authentication data necessary for the authentication is duplicated from the authenticating server 7, and the information inside the information storing means 68 is updated.

### INDUSTRIAL APPLICABILITY

As described above, according to the present invention, apart from the first authenticating server (authenticating server 7) arranged at the place away from the mobile network (mobile router lower network 4) arranged inside the mobile body,
the second authenticating server (lower authenticating server 12) is arranged inside the mobile network, and even the second authenticating server can authenticate the mobile terminals (the terminals 13a, 13b). Thus, even if the connection between the moving mobile router and the mobile router access base station on the ground side is unstable or impossible, the authentication of the terminal trying the connection (participation) to the mobile network can be performed efficiently.

## Claims

1. A terminal authenticating system wherein when a mobile terminal participates in a mobile network arranged inside a mobile body, a first authenticating server arranged at a place away from said mobile network can authenticate said mobile terminal, said terminal authenticating system being **characterized in that** a second authenticating server is arranged inside said mobile network, and even said second authenticating server can authenticate said mobile terminal.

2. The terminal authenticating system according to claim 1, **characterized in that** said second authenticating server has: authenticating means which can authenticate said mobile terminal; and information storing means which can store an authentication data to be referred when said mobile terminal is authenticated.

3. The terminal authenticating system according to claim 2, **characterized in that** an authentication request is transmitted from said mobile terminal to said second authenticating server.

4. The terminal authenticating system according to claim 3, **characterized in that** said second authenticating server has connection judging means for judging whether or not a communication between said first authenticating server and said second authenticating server is possible, and when said second authenticating server receives said authentication request from said mobile terminal, if the communication with said first authenticating server is judged to be possible, sends said authentication request to said first authenticating server and receives an authentication result of said mobile terminal from said first authenticating server, and if the communication with said first authenticating server is judged to be impossible, uses said authenticating means and authenticates said mobile terminal.

5. The terminal authenticating system according to claim 4, **characterized in that** when sending said authentication request to said first authenticating server and receiving the authentication result of said mobile terminal from said first authenticating server, said second authenticating server correlates an identification information of said mobile terminal and the authentication result of said mobile terminal and stores as said authentication data in said information storing means.

6. The terminal authenticating system according to claim 1, **characterized in that** said second authenticating server has connection judging means for judging whether or not a communication between said first authenticating server and said second authenticating server is possible, and said connection judging means judges whether or not a communication with said first authenticating server is possible, and if the communication with said first authenticating server is judged to be possible, said second authenticating server obtains said authentication data required to authenticate said mobile terminal from said first authenticating server at any timing and stores in said information storing means.

7. The terminal authenticating system according to claim 6, **characterized in that** said second authenticating server obtains said authentication data from said first authenticating server at a predetermined timing and updates said authentication data stored in said information storing means.

8. The terminal authenticating system according to claim 3, **characterized in that** when said second authenticating server authenticates said mobile terminal and fails to authenticate said mobile terminal, said second authenticating server sends said authentication request to said first authenticating server and receives the authentication result of said mobile terminal from said first authenticating server.

9. The terminal authenticating system according to claim 3, **characterized in that** the authentication result carried out by said first authenticating server or said second authenticating server is reported to said mobile terminal transmitting said authentication request from said second authenticating server.

10. A terminal authenticating method wherein when a mobile terminal participates in a mobile network arranged inside a mobile body, a first authenticating server arranged at a place away from said mobile network can authenticate said mobile terminal, said terminal authenticating method being **characterized in that** a second authenticating server arranged inside said mobile network authenticates said mobile terminal.

11. The terminal authenticating method according to claim 10, **characterized in that** said mobile terminal transmits an authentication request to said second authenticating server.

12. The terminal authenticating method according to claim 11, **characterized in that** when said second authenticating server receives said authentication request from said mobile terminal and judges whether or not a communication between said first authenticating server and said second authenticating server is possible, and if the communication with said first authenticating server is judged to be possible, sends said authentication request to said first authenticating server and receives an authentication result of said mobile terminal from said first authenticating server, and if the communication with said first authenticating server is judged to be impossible, said second authenticating server authenticates said mobile terminal.

13. The terminal authenticating method according to claim 12, **characterized in that** when sending said authentication request to said first authenticating server and receiving the authentication result of said mobile terminal from said first authenticating server, said second authenticating server correlates and stores an identification information of said mobile terminal and the authentication result of said mobile terminal.

14. The terminal authenticating method according to claim 11, **characterized in that** said second authenticating server judges whether or not a communication between said first authenticating server and said second authenticating server is possible, and if the communication with said first authenticating server is judged to be possible, obtains and stores said authentication data required to authenticate said mobile terminal from said first authenticating server at any timing.

15. The terminal authenticating method according to claim 14, **characterized in that** said second authenticating server obtains said authentication data from said first authenticating server at a predetermined timing and updates said authentication data stored in said second authenticating server.

16. The terminal authenticating method according to claim 11, **characterized in that** when said second authenticating server authenticates said mobile terminal and fails to authenticate said mobile terminal, said second authenticating server sends said authentication request to said first authenticating server, and said first authenticating server carries out the authentication, and said first authenticating server transmits the authentication result of said mobile terminal to said second authenticating server.

17. The terminal authenticating method according to claim 11, **characterized in that** said second authenticating server reports the authentication result carried out by said first authenticating server or said second authenticating server to said mobile terminal transmitting said authentication request.

18. A terminal authenticating server which, when a mobile terminal participates in a mobile network arranged inside a mobile body, can authenticate said mobile terminal, said terminal authenticating server being **characterized in that** it is arranged inside said mobile network, apart from a terminal authenticating server arranged at a place away from said mobile network.

19. The terminal authenticating server according to claim 18, **characterized by** having: authenticating means which can authenticate said mobile terminal; and information storing means which can store an authentication data to be referred when said mobile terminal is authenticated.

20. The terminal authenticating server according to claim 19, **characterized by** receiving an authentication request from said mobile terminal.

21. The terminal authenticating server according to claim 20, **characterized in that** it has connection judging means for judging whether or not a communication with the terminal authenticating server arranged at the place away from said mobile network is possible, and when receiving said authentication request from said mobile terminal, if the communication with said terminal authenticating server arranged at the place away from said mobile network is judged to be possible, it sends said authentication request to the terminal authenticating server arranged at the place away from said mobile network, and receives an authentication result of said mobile terminal from the terminal authenticating server arranged at the place away from said mobile network, and if the communication with the terminal authenticating server arranged at the place away from said mobile network is judged to be impossible, it uses said authenticating means and authenticates said mobile terminal.

22. The terminal authenticating server according to claim 21, **characterized in that** when receiving the authentication result of said mobile terminal from the terminal authenticating server arranged at the place away from said mobile network, it correlates an identification information of said mobile terminal and the authentication result of said mobile terminal and stores as said authentication data in said information storing means.

23. The terminal authenticating server according to claim 18, **characterized in that** it has connection judging means for judging whether or not a communication with the terminal authenticating server arranged at the place away from said mobile network, and if the communication with the terminal authenticating server arranged at the place away from said mobile network is judged to be possible, it obtains said authentication data required to authenticate said mobile terminal from the terminal authenticating server arranged at the place away from said mobile network at any timing and stores in said information storing means.

24. The terminal authenticating server according to claim 23, **characterized in that** it obtains said authentication data from the terminal authenticating server arranged at the place away from said mobile network at a predetermined timing and updates said authentication data stored in said information storing means.

25. The terminal authenticating server according to claim 19, **characterized in that** when said authenticating means authenticates said mobile terminal and fails to authenticate said mobile terminal, it sends said authentication request to the terminal authenticating server arranged at the place away from said mobile network and receives the authentication result of said mobile terminal from said first authenticating server.

26. The terminal authenticating server according to claim 19, **characterized in that** the authentication result carried out by the terminal authenticating server arranged at the place away from said mobile network, or the authentication result carried out by the terminal authenticating server is reported to said mobile terminal transmitting said authentication request.
